# EUROPÄISCHE PATENTSCHRIFT

(11) **EP 3 578 523 B1**
(45) Veröffentlichungstag und Bekanntmachung des Hinweises auf die Patenterteilung: **13.09.2023**
(21) Anmeldenummer: 18175730.3
(22) Anmeldetag: 04.06.2018
(51) Int. Cl.: C02F 3/32, C02F 3/02

(54) **TRANSPORTABLE KLÄREINHEIT SOWIE VERFAHREN ZUM KLÄREN VON ABWASSER**
TRANSPORTABLE WASTE WATER TREATMENT UNIT AND METHOD FOR PURIFYING WASTE WATER
UNITÉ D'ÉPURATION PORTABLE AINSI QUE PROCÉDÉ D'ÉPURATION DES EAUX USÉES

(43) Veröffentlichungstag der Anmeldung: 11.12.2019
(73) Patentinhaber: BAUER Resources GmbH, 86529 Schrobenhausen (DE)
(72) Erfinder: PRIGENT, Stephane, Al Mina Muscat (OM); STEFANAKIS, Alexandros, Al Mina Muscat (OM); BREUER, Roman, 86633 Neuburg a.d. Donau (DE)
(74) Vertreter: Wunderlich & Heim Patentanwälte Partnerschaftsgesellschaft mbB

(56) Entgegenhaltungen:
- DE-U1- 20 221 682
- GB-A- 2 358 858
- US-A- 6 126 827
- US-A1- 2008 179 240
- US-A1- 2017 158 536
- US-A1- 2018 105 445

## Beschreibung

Die Erfindung betrifft eine transportable Kläreinheit zum Klären von Abwasser nach Anspruch 1. Weiterhin betrifft die Erfindung ein Verfahren zum Klären von Abwasser gemäß dem Anspruch 8.

Zur Abwasserbehandlung werden in jüngerer Zeit zunehmend Pflanzenkläranlagen eingesetzt, bei denen das Abwasser einen mit speziellen Ried- beziehungsweise Schilfpflanzen bepflanzten Bodenkörper durchfließt, wobei chemisch-physikalische und biologische Reinigungsvorgänge ablaufen. Die Abwasserbehandlung erfolgt durch ein Zusammenwirken mit speziell ausgewählten Bodenschichten, den Riedpflanzen, Mikroorganismen und der in den Bodenschichten vorhandenen Porenluft.

Pflanzenkläranlagen bewirken eine naturnahe biologische Abwasserreinigung. Besonders aus ökonomischen und ökologischen Gründen eignen sie sich für die dezentrale Abwasserbehandlung, die sich durch geringe spezifische Kanal-/Rohrleitungslängen auszeichnet. Neben dem Erfordernis geeigneter Flächengrößen und Lagen bieten sie den bedeutsamen Vorteil ihrer naturfreundlichen Einbindung in das Umfeld.

Eine der größten Pflanzenkläranlagen zum Aufbereiten und Entsorgen von salz- und ölhaltigem Abwasser ist aus der EP 2 213 629 B1 bekannt. Diese bekannte Pflanzenkläranlage, welche seit vielen Jahren erfolgreich im Oman zum Aufbereiten von über 100.000 m³ Ölförderwasser pro Tag erfolgreich eingesetzt wird, zeigt die hohe Leistungsfähigkeit von Pflanzenkläranlagen.

Aus der DE 198 38 692 A ist eine Pflanzenbeetkläranlage für den stationären Einsatz bekannt. Diese Pflanzenbeetkläranlage besitzt im Zulaufabschnitt eine Mehrkammergrube, die über einen Verteilerschacht Abwasser in die eigentliche Pflanzenklärstufe einleitet. An die Pflanzenklärstufe schließt sich auf der Anschlussseite ein separater Kontrollschacht an. Diese Pflanzenbeetkläranlage besteht somit aus zumindest vier Volumenkörpern, die separat im Boden eingebracht und während des Einbaus in korrekter Weise miteinander verbunden werden müssen. Diese bekannten Pflanzenkläranlagen sind für einen langfristigen stationären Einsatz vorgesehen. Diese benötigen in der Regel eine relativ große Fläche sowie eine Bauzeit von mehreren Monaten, wobei für das Anwachsen der Pflanzen sogar noch längere Zeitspannen auftreten können, bis eine vollständige Leistungsfähigkeit der Kläranlage erreicht ist.

Aus der DE 202 21 682 U1 geht eine weitere stationäre Pflanzenkläranlage hervor, bei der ein Gehäuse ohne Bepflanzung transportierbar ist.

Eine gattungsgemäße mobile Kläranlage geht aus der US 2008/179240 A1 hervor. Ein Abwasser wird seitlich in einen unteren und mittleren Bereich eingeleitet, während geklärtes Abwasser mittels eines höherliegenden horizontalen Abführrohres abgeleitet wird.

Die GB 2,358,858 A offenbart eine transportable Kläranlage, welche mit einem Lehmboden befüllt ist, welcher mit Kompostmaterial und Sand vermengt werden kann.

Der Erfindung liegt die **Aufgabe** zugrunde, eine Vorrichtung und ein Verfahren zum biologischen Klären von Abwasser anzugeben, welche sowohl besonders kosteneffizient als auch besonders kurzfristig betreibbar sind.

Die Erfindung wird zum einen durch eine transportable Kläreinheit mit den Merkmalen des Anspruchs 1 und zum anderen durch ein Verfahren mit den Merkmalen des Anspruchs 8 gelöst. Bevorzugte Ausführungsformen sind in den abhängigen Ansprüchen angegeben.

Gemäß der Erfindung ist eine transportable Kläreinheit zum Klären von Abwasser vorgesehen mit:
- einem kastenförmigen, wasserdichten Transportbehälter, welcher an seiner Oberseite offen ist,
- einer Zuführeinrichtung zum Zuführen von Abwasser in den Transportbehälter,
- einer Abführeinrichtung zum Abführen von geklärtem Abwasser,
- einem im Transportbehälter vorgesehenen Klärbereich, welcher mit einem granulatförmigen Substrat versehen ist, und
- Riedpflanzen, welche zur Unterstützung des Abbaus von Verunreinigungen im Abwasser geeignet und auf dem Substrat gepflanzt sind, wobei das Substrat schichtweise aufgebaut ist und zumindest eine Schicht ein porenhaltiges, leichtgewichtiges Substrat enthält, dadurch gekennzeichnet, dass der Klärbereich mindestens zwei teilweise getrennte Klärabschnitte aufweist, dass die Zuführeinrichtung für das Abwasser mindestens einen Zulauf aufweist, welcher oberhalb des Substrats angeordnet ist, dass die Zuführeinrichtung für den ersten Klärabschnitt einen ersten Zulauf und für den zweiten Klärabschnitt einen zweiten Zulauf aufweist, dass die Abführeinrichtung mindestens ein im Substrat horizontal verlaufendes Auslasselement aufweist, welches zum Aufnehmen und Ableiten des gereinigten Abwassers mit einer Abführleitung verbunden ist, welche aus dem Transportbehälter führt, dass auf dem Substrat unterhalb des Zulaufs ein pyramidenstumpfförmiges Aufprallelement angeordnet ist, wobei das Abwasser vor einem Auftreffen auf dem pyramidenstumpfförmigen Aufprallelement einen Bereich Umgebungsluft durchläuft, dass der erste Zulauf und der zweite Zulauf jeweils oberhalb des pyramidenstumpfförmigen Aufprallelementes münden und dass das Auslasselement in der unteren Substratschicht angeordnet ist.

Eine Grundidee der Erfindung liegt darin, eine Pflanzenkläranlage im Wesentlichen als eine transportable Kläreinheit vorzusehen. Diese umfasst gemäß der Erfindung einen kastenförmigen, wasserdichten Transportbehälter, welcher an seiner Oberseite offen ist. Der Transportbehälter kann die Abmessungen eines Standard-Transportcontainers haben und vorzugsweise aus einem solchen aufgebaut sein. In dem Transportbehälter ist ein Klärbereich angeordnet, welcher mit einem granulatförmigen Substrat versehen ist. Das Substrat ist zum Aufnehmen von Riedpflanzen vorgesehen, welche zum Abbau von Verunreinigungen im Abwasser geeignet sind. Die Riedpflanzen können dabei aus der offenen Oberseite des Transportbehälters herauswachsen. Riedpflanzen im Sinne der Erfindung können geeignete Schilf- oder Sumpfpflanzen sein, insbesondere Phragmites australis, welche beim Abbau von Verunreinigungen mitwirken, wobei der eigentliche Abbau durch Mikroorganismen im Wurzelbereich erfolgen kann.

Des Weiteren ist die transportable Kläreinheit mit einer Zuführeinrichtung zum Zuführen von Abwasser in den Transportbehälter und eine Abführeinrichtung zum Abführen von geklärtem Abwasser aus dem Transportbehälter versehen. Die Kläreinheit stellt somit einen wesentlichen Teil einer Pflanzenkläranlage dar. Die transportable Kläreinheit kann insbesondere mit Tiefladern und einem Kran transportiert werden. Dies ermöglicht einen schnellen Aufbau und auch einen schnellen Abbau der Pflanzenkläranlage. Damit kann eine Pflanzenkläranlage auch nur für einen begrenzten Zeitraum in effizienter Weise erstellt und genutzt werden. Die Kläreinheit ist dabei wiederverwendbar. Das Substrat kann ein natürliches oder künstliches Substrat sein, welches besonders leicht ist.

Dabei ist eine Pflanzenkläranlage insbesondere an abgelegenen Orten für einen begrenzten Zeitraum kosteneffizient einsetzbar, etwa an Baustellen in abgelegenen Gegenden. Die Kläreinheit ist dabei bevorzugt ausgelegt, übliches Haushaltsabwasser zu klären, wie diese etwa an Wohn- und Arbeitsstätten von Personen auftreten können.

Eine bevorzugte Ausführungsform der mobilen Kläreinheit besteht darin, dass in dem Klärbereich ein Leitungssystem zum Einleiten von Luft in das Substrat vorgesehen ist. Das Leitungssystem, welches aus mehreren Rohren bestehen kann, ist vorzugsweise in einem unteren Bereich des Klärbereiches angeordnet. Über ein Gebläse kann so eine Zwangsbelüftung durchgeführt werden. Die Zuführung von Sauerstoff in den Klärbereich verbessert und beschleunigt die Abbauprozesse in dem biologischen Klärbereich.

Weiterhin ist es nach der Erfindung vorgesehen, dass die Zuführeinrichtung für das Abwasser mindestens einen Zulauf aufweist, welcher oberhalb des Substrats angeordnet ist, und dass auf dem Substrat unterhalb des Zulaufs ein Aufprallelement angeordnet ist. Der Zulauf mündet oberhalb des Substrats, vorzugsweise in einer Mitte des jeweiligen Klärbereichs. Das Abwasser durchläuft so noch einen Bereich Umgebungsluft und trifft auf ein Aufprallelement auf der Oberfläche des Substrats auf. Hierdurch wird eine verbesserte Verteilung des Abwassers im Klärbereich mit gleichzeitiger Vermischung mit Umgebungsluft erreicht. Ein Teil der Feststoffe des Abwassers kann sich als Klärschlamm an der Oberfläche oder einem oberflächennahen Bereich als Klärschlamm absetzen und dort mineralisieren. Es kann sich eine Schicht von Klärschlamm aufbauen.

Nach einer weiteren Ausführungsform der Erfindung ist es bevorzugt, dass an dem Transportbehälter in einem oberen Bereich mindestens eine Überlauföffnung und an einem unteren Bereich mindestens ein Ablassventil angeordnet sind. Durch den Überlauf wird eine unerwünschte Überfüllung des Klärbereichs verhindert, was zu einer Schädigung der Riedpflanzen führen könnte. Vorzugsweise ist der Überlauf unterhalb oder knapp oberhalb der Oberfläche des Substrats angeordnet. Ein Ablassventil ist im unteren Bereich des Transportbehälters angeordnet, so dass bei Bedarf, etwa zu Transportzwecken, der Transportbehälter von Abwasser vollständig entleert werden kann. So kann das Transportgewicht reduziert werden.

Bei der erfindungsgemäßen Kläreinheit ist vorgesehen, dass die Abführeinrichtung mindestens ein im Substrat horizontal verlaufendes Auslasselement aufweist, welches zum Aufnehmen und Ableiten des gereinigten Abwassers mit einer Abführleitung verbunden ist, welche aus dem Transportbehälter führt. Das Auslasselement kann insbesondere einen Zylinderkörper oder einen Hülsenkörper aus einem Sieb- oder Filtermaterial aufweisen, welcher von dem gereinigten Abwasser noch abschließend zu durchströmen ist. Aus dem Innenraum des hohlen Auslasselementes kann dann das gereinigte Abwasser frei oder mittels einer Pumpe nach außen abgeführt werden. Das Auslasselement ist erfindungsgemäß in der untersten Substratschicht angeordnet.

Dabei ist es besonders zweckmäßig, dass die Abführleitung zu einer Mess- und Umleiteinrichtung führt, durch welche eine Reinheit des gereinigten Abwassers messbar ist, und dass abhängig von einem Messergebnis das gereinigte Abwasser weitergeleitet oder rückgeführt wird. Die Messeinrichtung kann dabei ein optisches oder chemisches oder sonstiges Sensorelement oder mehrere Sensorelemente aufweisen, durch die ein Reinigungsgrad des Abwassers messbar und einstellbar ist. Abhängig vom Messergebnis wird mittels einer Steuereinheit vorzugsweise ein Schaltventil betätigt, durch welches das gemessene gereinigte Abwasser entweder zu einer Endnutzung weitergeleitet oder für eine nochmalige Reinigung rückgeleitet wird.

Grundsätzlich kann jedes geeignete Substrat vorgesehen werden, welches für die Aufnahme von Riedpflanzen geeignet ist. Die Erfindung zeichnet sich dadurch aus, dass das Substrat schichtweise aufgebaut ist und zumindest eine Schicht ein porenhaltiges Substrat enthält. Vorzugsweise ist das Substrat insgesamt aus einem porenhaltigen Material, insbesondere einem porenhaltigen Granulat, aufgebaut. Hierdurch kann das Granulat selbst Sauerstoff aufnehmen, was biologische Abbauprozesse unterstützt. Zudem wird so ein Transportgewicht der mobilen Kläranlage reduziert. Als Substrate können beispielsweise Blähton, geschäumte stabile Kunststoffe, Kunststoffabfälle oder auch andere voluminöse, Hohlräume enthaltende natürliche oder künstliche Materialien verwendet werden.

Da das zu reinigende schlammartige Abwasser von oben nach unten den Klärbereich durchläuft, können verschiedene Schichten entsprechend dem jeweils ablaufenden Abbauprozessen und abhängig von den verwendeten Riedpflanzen vorgesehen sein.

Nach der Erfindung weist der Klärbereich mindestens zwei teilweise getrennte Klärabschnitte auf, welche jeweils mit einer eigenen Zuleitung für Abwasser versehen sind. Die Klärabschnitte können dabei jeweils nur in einem oberflächennahen Bereich durch ein entsprechendes Trennelement, etwa ein Trennblech, getrennt sein. In einem unteren Bereich können die Klärabschnitte leitungsverbunden und zueinander offen sein.

Dabei kann die Kläreinheit so ausgebildet werden, dass die einzelnen getrennten Klärabschnitte jeweils nur zu bestimmten zeitlich versetzten Zeitspannen mit frischem Abwasser versorgt werden. Bei zwei Klärabschnitten kann beispielsweise die Abwasserversorgung tageweise wechselnd erfolgen. Dies bedeutet, dass ein Klärabschnitt an einem Tag mit frischem Abwasser versorgt wird, während sich auf dem anderen Abschnitt der versetzte Klärschlamm verfestigen kann und sich so im Verlauf von Monaten eine Schicht aus versetztem Klärschlamm aufbaut, die unter den gegebenen feuchten und aeroben Bedingungen mineralisiert wird.

Die Erfindung umfasst weiterhin eine Kläranlage mit mindestens einem Abwassersammelbereich und mindestens einer Kläreinheit, wie sie zuvor beschrieben wurde, wobei mittels einer Pumpe Abwasser von dem Abwassersammelbereich ansaugbar und der mindestens einen Kläreinheit chargenweise zuleitbar ist. Der Abwassersammelbereich kann etwa ein bereits vorhandenes Becken oder ein separater Container sein, welcher ebenfalls mobil sein kann. Über eine Pumpe und eine entsprechende Steuereinheit kann das Abwasser aus dem Abwassersammelbereich dann über die Zuführeinrichtung der mindestens einen Kläreinheit zugeführt werden.

Besonders bevorzugt ist es dabei, dass mehrere Kläreinheiten vorgesehen sind, die parallel und/oder seriell miteinander mit einer Leitung verbunden sind.

Insbesondere kann nach einer Ausführungsvariante der Erfindung eine Mess- und Umleiteinrichtung vorgesehen sein, durch welche eine Reinheit des geklärten Abwassers messbar ist, wobei abhängig von einem Messergebnis das geklärte Wasser weiterleitbar und in den Klärbereich rückführbar ist. Die Mess- und Umleiteinrichtung kann dabei an jeder einzelnen Kläreinheit oder bei zusammengeschalteten Kläreinheiten am Ende der gesamten Kläranlage angeordnet sein.

Die Rückführung von nicht hinreichend geklärtem Abwasser kann unmittelbar in einen Klärbereich einer Kläreinheit oder in den Abwassersammelbereich erfolgen.

Die Erfindung betrifft weiter ein Verfahren zum Klären von Abwasser, welches dadurch gekennzeichnet ist, dass mindestens eine transportable Kläreinheit nach einem der Ansprüche 1 bis 7 verwendet wird. Durch die Verwendung der mobilen Kläreinheit können die zuvor beschriebenen Vorteile bei der Durchführung des Verfahrens erzielt werden. Die Zuführung und Abführung von Abwasser kann dabei weitgehend automatisch durch eine zentrale Steuereinheit erfolgen.

Die Erfindung wird nachfolgend anhand eines bevorzugten Ausführungsbeispiels weiter beschrieben, welches schematisch in den Zeichnungen mit unterschiedlichen Maßstäben dargestellt ist. In den Zeichnungen zeigen:
- Fig. 1: einen schematischen Schaltplan einer erfindungsgemäßen Kläranlage;
- Fig. 2: eine schematische Draufsicht auf die Ausführung der Kläranlage von Fig. 1;
- Fig. 3: einen Längsschnitt durch eine Kläreinheit der Kläranlage von Fig. 2;
- Fig. 4: eine Draufsicht auf die Kläreinheit von Fig. 3;
- Fig. 5: einen Querschnitt durch die Kläreinheit von Fig. 3 und Fig. 4;
- Fig. 6: eine schematische Draufsicht auf ein Belüftungssystem für die erfindungsgemäße Kläreinheit nach den Figuren 3 bis 5; und
- Fig. 7: eine vergrößerte Detailansicht von Fig. 6.

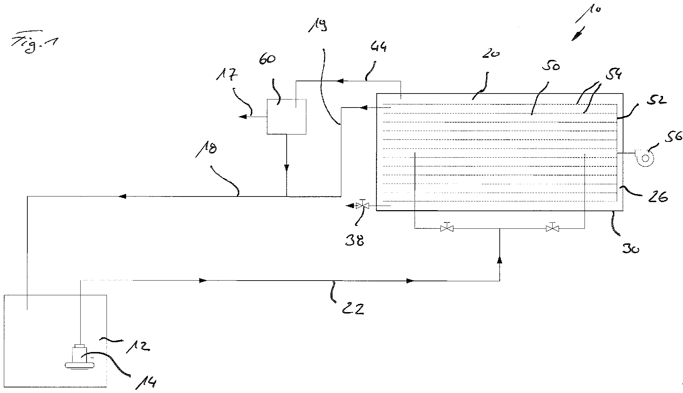

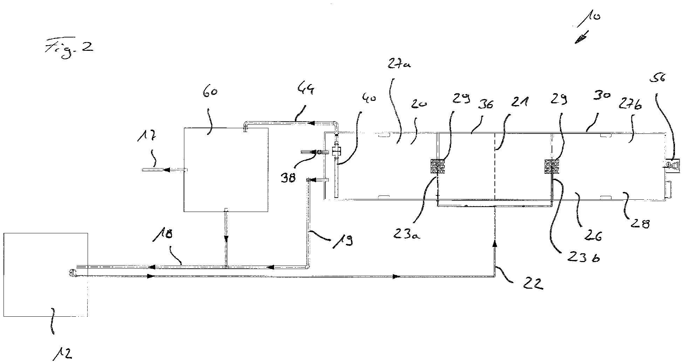

Der grundsätzliche Aufbau einer erfindungsgemäßen Kläranlage 10 mit einer mobilen Kläreinheit 20 wird zunächst nachfolgend im Zusammenhang mit den Figuren 1 und 2 erläutert. Die eigentliche Klärung des Abwassers erfolgt in der Kläreinheit 20 mit einem kastenförmigen Transportbehälter 30, wobei der Aufbau der Kläreinheit 20 noch nachfolgend im Zusammenhang mit weiteren Figuren näher beschrieben wird.

Die Kläranlage 10 weist einen Abwassersammelbereich 12 auf, in dem Abwasser gesammelt wird. Dies kann ein separater Behälter oder ein bereits bestehendes Abwasserbecken sein. Mittels einer Pumpe 14, welche bevorzugt mit einem Schneidrad versehen ist, wird das schlammartige Abwasser aus dem Abwassersammelbereich 12 mit einer Zuführeinrichtung 22 zu der Kläreinheit 20 und von oben durch die offene Oberseite 36 in den ansonsten wasserdichten Transportbehälter 30 eingeleitet.

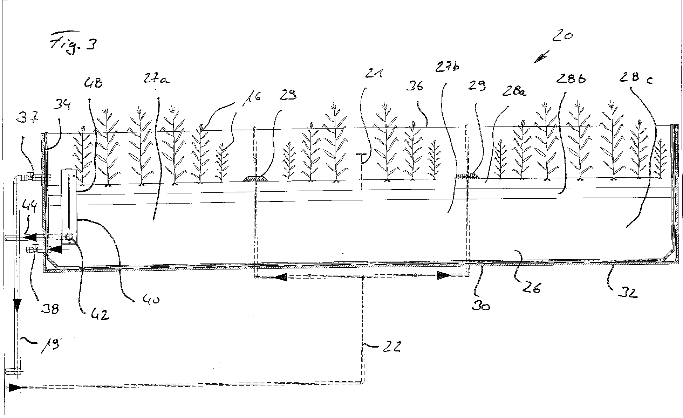

In der Kläreinheit 20 befindet sich ein mit Substrat 28 gefüllter Klärbereich 26, wobei auf dem Substrat 28 Riedpflanzen 16 zur biologischen Abwasserklärung gepflanzt sind, wie in Fig. 3 gezeigt ist. Der Klärbereich 26 ist bei dem in Fig. 2 dargestellten Ausführungsbeispiel mittels eines etwa mittig angeordneten Trennelementes 21 zumindest in seinem Oberflächenbereich in einen ersten Klärabschnitt 27a und einen zweiten Klärabschnitt 27b unterteilt. Es können auch mehr Klärabschnitte 27 mit mehr Trennelementen 21 vorgesehen sein. Die Zuführeinrichtung 22 weist für den ersten Klärabschnitt 27a einen ersten Zulauf 23a und der zweite Klärabschnitt 27b einen zweiten Zulauf 23b auf. Die Zuläufe 23a, 23b münden jeweils oberhalb eines pyramidenstumpfförmigen Aufprallelementes 29 mit einem gewissen Abstand hierzu, wobei ein Aufbau von mineralisiertem Klärschlamm ermöglicht wird. Das Substrat 28 und die chargenweise Zuströmung des Abwassers werden so dimensioniert, dass eine möglichst gleichmäßige Verteilung des Klärschlamms auf das Substrat 28 erfolgt und sich über die Zeit aufbauen kann. Es kann allgemein ein Aufbau von bis zu 40 cm und mehr vorgesehen sein, wobei der aufgebaute Klärschlamm mit der Zeit mineralisiert. Das Aufprallelement 29 fördert die Verteilung des Abwassers, unterstützt den Sauerstoffeintrag und verhindert eine Erosion von Substrat. Das Aufprallelement 29 kann aus Kies gebildet sein.

Das gereinigte Abwasser kann mittels einer Abführeinrichtung 40 und einer Abführleitung 44 aus dem Transportbehälter 30 abgeleitet werden. Zusätzlich sind an einem unteren Ende des Transportbehälters 30 ein Ablassventil 38 und an einem oberen Bereich knapp oberhalb des Substrates 28 eine Überlauföffnung 37 angeordnet. Das Ablassventil 38 dient beispielsweise zum Entleeren des Transportbehälters 30, wenn dieser abtransportiert werden soll. Mittels einer Ablassleitung 19 kann überschüssiges Abwasser zur Rückführleitung 18 und über diese wieder zurück in den Abwassersammelbereich 12 geleitet werden. Auf diese Weise kann eine Schädigung der Riedpflanzen in der Kläreinheit 20 durch einen zu hohen Abwasserstand vermieden werden.

Das über die Abführleitung 44 entnommene geklärte Abwasser wird zu einer Mess- und Umleiteinrichtung 60 geleitet, in der die Qualität des gereinigten Abwassers geprüft wird. Wird dieses für gut befunden, wird das gereinigte Abwasser über eine Klarwasserleitung 17 etwa zur weiteren Nutzung als Brauchwasser abgeleitet. Sollte die geforderte Reinigungsqualität nicht erreicht sein, wird in der Mess- und Umleiteinrichtung 60 mittels einer Steuereinheit und eines Steuerventils das Abwasser zurück über die Rückführleitung 18 in den Abwassersammelbereich 12 geleitet.

An einem Bodenbereich des kastenförmigen Transportbehälters 30 der mobilen Kläreinheit 20 ist ein Luftleitungssystem 50 zum Zuführen von Luft in den Klärbereich 26 vorgesehen. Das Luftleitungssystem 50 weist ein quer verlaufendes Verteilerrohr 52 auf, an welchem sich fingerartig eine Vielzahl von perforierten Lüftungsrohren 54 zur flächigen Abgabe von Luft in den Klärbereich 26 anschließen. Mittels eines außenliegenden Gebläses 56 wird Umgebungsluft angesaugt und in das Lüftungssystem 50 eingeleitet.

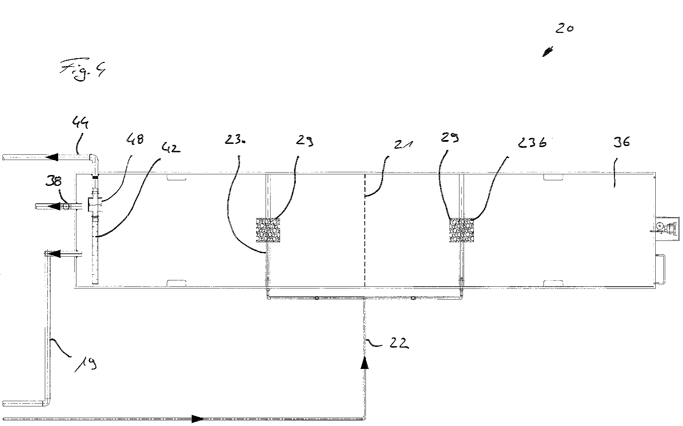

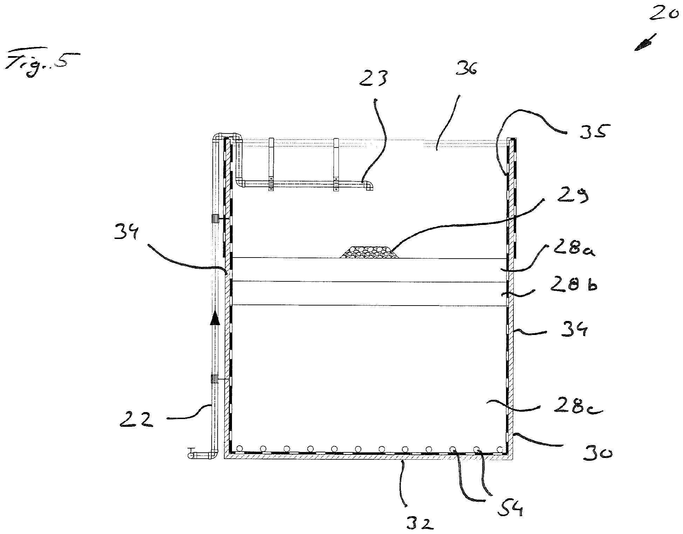

Der Aufbau der erfindungsgemäßen mobilen Kläreinheit 20 mit dem kastenförmigen Transportbehälter 30 wird näher im Zusammenhang mit den Figuren 3 bis 5 erläutert. Der kastenförmige Transportbehälter 30 weist einen Boden 32 und vier vertikale Seitenwände 34 sowie eine oben offene Oberseite 36 auf. Der Transportbehälter 30 kann insbesondere aus einem metallischen Standard-Transportbehälter gebildet sein, wobei die Innenseite mit einer Dichtungsfolie 35 ausgelegt ist. Der Transportbehälter 30 ist so stabil ausgebildet, dass er wie ein Container transportiert werden kann.

An einem Bodenbereich des Transportbehälters 30 ist das Lüftungssystem 50 mit den parallel zueinander angeordneten und in Längsrichtung verlaufenden perforierten Lüftungsrohren 54 angeordnet. Auf dem Boden 32 mit dem Lüftungssystem 50 ist bei dem gezeigten Ausführungsbeispiel ein Substrat 28 in drei Schichten, einer oberen Substratschicht 28a, einer mittleren Substratschicht 28b und einer unteren Substratschicht 28c angeordnet. Grundsätzlich können auch mehr oder weniger Substratschichten vorgesehen sein. Das vorzugsweise leichte und porenhaltige Substrat 28, welches aus unterschiedlichen Materialien aufgebaut sein kann, ist zum Bepflanzen mit Riedpflanzen 16 ausgebildet. Die Riedpflanzen 16 können von der oberen Substratschicht 28a nach oben wachsen und können insbesondere durch die offene Oberseite 36 aus dem Transportbehälter 30 herausragen. Auf der oberen Substratschicht 28a ist für jeden Klärabschnitt 27a, 27b des Klärbereichs 26 jeweils ein pyramidenstumpfförmiges Aufprallelement 29 angeordnet. Diese befinden sich etwa mittig im jeweiligen Klärabschnitt 27a, 27b. Unmittelbar oberhalb des jeweiligen Aufprallelementes 29 münden die beiden Zuläufe 23a, 23b, über die das Abwasser in den Transportbehälter 30 eingeleitet wird. Das Abwasser wird über die Zuführleitung 22 aus dem Abwassersammelbereich 12 zugeführt.

Die beiden Klärabschnitte 27a, 27b sind in ihrem oberen Bereich mit einem quer durchgehenden Trennelement 21 voneinander getrennt, wobei sich das Trennelement 21 jedoch in vertikaler Richtung nur bis zum unteren Ende der oberen Substratschicht 28a erstreckt. In der oberen Substratschicht 28a erfolgt eine erste und wesentliche Reinigung durch den Wurzelbereich der gepflanzten Riedpflanzen. Aufgrund der Trennung der beiden Klärabschnitte 27a, 27b können diese jeweils zeitlich versetzt, etwa mit einem Abstand von einem Tag, mit frischem Abwasser versorgt werden. Das so in der obersten Substratschicht 28a vorgereinigte Abwasser kann dann in die unteren Substratschichten 28b, 28c gelangen, welche für den gesamten Klärbereich 26 durchgehend sind.

Über eine nicht näher dargestellte Abführpumpe einer Abführeinrichtung 40 kann aus der unteren Substratschicht 28c gereinigtes Abwasser über die Abführleitung 44 abgeführt werden. Die Abführeinrichtung 40 kann dabei ein sich horizontal in der unteren Substratschicht 28 erstreckendes rohrförmiges Auslasselement 42 aufweisen. Dieses kann mit einem vertikal verlaufenden Vertikalschacht 48 in Verbindung stehen, welcher sich nach oben bis über die erste Substratschicht 28a hinaus erstreckt. Grundsätzlich können auch andere Abführeinrichtungen 40 zum Einsatz kommen.

Zusätzlich befindet sich in einer Seitenwand 34 des Transportbehälters 30 in einem unteren Bereich ein Ablassventil 38 sowie in einem mittleren oder oberen Bereich eine Überlauföffnung 37, welche geöffnet und geschlossen werden kann. Überschüssiges Abwasser in dem Transportbehälter 30 kann so über die Überlauföffnung 37 und eine Überlaufleitung 19 zu einer Rückführleitung 18 wieder zu dem Abwassersammelbereich 12 rückgeleitet werden.

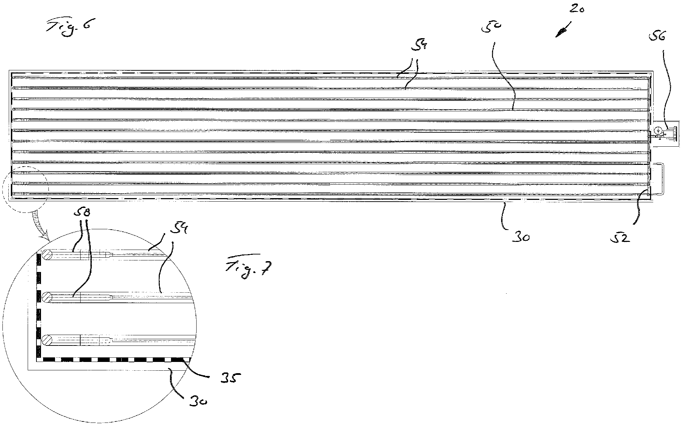

Der Aufbau des Lüftungssystems 50 ist näher in den Figuren 6 und 7 gezeigt. Mit einem Gebläse 56 wird Umgebungsluft zunächst in ein quer verlaufendes Verteilungsrohr 52 eingeleitet, von welchem sich fingerartig eine Vielzahl von parallel verlaufenden perforierten Lüftungsrohren 54 entlang des Bodenbereichs des Transportbehälters 30 erstrecken. Die Lüftungsrohre 54 können dabei unmittelbar auf einer Dichtungsfolie 35 aufliegen, welche sich entlang einer Innenseite des Transportbehälters 30 erstreckt. An ihren freien Enden sind die Lüftungsrohre 54 mittels Verschlusselementen 58 verschlossen. Über nicht dargestellte Öffnungen in den Lüftungsrohren 54 kann Luft fein verteilt über die gesamte Unterseite des Transportbehälters 30 in das mit Abwasser gesättigte Substrat 28 einströmen. Die gleichmäßige Sauerstoffzuführung unterstützt dabei die biologischen Abbauprozesse im Klärbereich 26.

## Patentansprüche

1. Transportable Kläreinheit zum Klären von Abwasser mit
- einem kastenförmigen, wasserdichten Transportbehälter (30), welcher an seiner Oberseite (36) offen ist,
- einer Zuführeinrichtung (22) zum Zuführen von Abwasser in den Transportbehälter (30),
- einer Abführeinrichtung (40) zum Abführen von geklärtem Abwasser,
- einem im Transportbehälter (30) vorgesehenen Klärbereich (26), welcher mit einem granulatförmigen Substrat (28) versehen ist, und
- Riedpflanzen (16), welche zum Abbau von Verunreinigungen im Abwasser geeignet und auf dem Substrat (28) gepflanzt sind,
wobei das Substrat (28) schichtweise aufgebaut ist und zumindest eine Schicht ein porenhaltiges, leichtgewichtiges Substrat (28) enthält,
**dadurch gekennzeichnet,**
**dass** der Klärbereich (26) mindestens zwei teilweise getrennte Klärabschnitte (27a, 27b) aufweist,
**dass** die Zuführeinrichtung (22) für das Abwasser mindestens einen Zulauf (23) aufweist, welcher oberhalb des Substrats (28) angeordnet ist,
**dass** die Zuführeinrichtung (22) für den ersten Klärabschnitt (27a) einen ersten Zulauf (23a) und für den zweiten Klärabschnitt (27b) einen zweiten Zulauf (23b) aufweist,
**dass** die Abführeinrichtung (40) mindestens ein im Substrat (28) horizontal verlaufendes Auslasselement (42) aufweist, welches zum Aufnehmen und Ableiten des gereinigten Abwassers mit einer Abführleitung (44) verbunden ist, welche aus dem Transportbehälter (30) führt,
**dass** auf dem Substrat (28) unterhalb des Zulaufs (23) ein pyramidenstumpfförmiges Aufprallelement (29) angeordnet ist, wobei das Abwasser vor einem Auftreffen auf dem pyramidenstumpfförmigen Aufprallelement (29) einen Bereich Umgebungsluft durchläuft,
**dass** der erste Zulauf (23a) und der zweite Zulauf (23b) jeweils oberhalb des pyramidenstumpfförmigen Aufprallelementes (29) münden und
**dass** das Auslasselement (42) in der unteren Substratschicht angeordnet ist.

2. Kläreinheit nach Anspruch 1,
**dadurch gekennzeichnet,**
**dass** in dem Klärbereich (26) ein Leitungssystem (50) zum Einleiten von Luft in das Substrat vorgesehen ist.

3. Kläreinheit nach einem der Ansprüche 1 bis 2,
**dadurch gekennzeichnet,**
**dass** an dem Transportbehälter (30) in einem oberen Bereich mindestens eine Überlauföffnung (37) und an einem unteren Bereich mindestens ein Ablassventil (38) angeordnet sind.

4. Kläreinheit nach Anspruch 3,
**dadurch gekennzeichnet,**
**dass** die Abführleitung (44) zu einer Mess- und Umleiteinrichtung (60) führt, durch welche eine Reinheit des gereinigten Abwassers messbar ist, und
**dass** abhängig von einem Messergebnis das gereinigte Abwasser weitergeleitet oder rückgeführt wird.

5. Kläranlage mit
- mindestens einem Abwassersammelbereich (12) und
- mindestens einer Kläreinheit (20) nach einem der Ansprüche 1 bis 5,
wobei mittels einer Pumpe (14) Abwasser von dem Abwassersammelbereich (12) ansaugbar und der mindestens einen Kläreinheit (20) zuleitbar ist.

6. Kläranlage nach Anspruch 5,
**dadurch gekennzeichnet,**
**dass** eine Mess- und Umleiteinrichtung (60) vorgesehen ist, durch welche eine Reinheit des geklärten Abwassers messbar ist, wobei abhängig von einem Messergebnis das geklärte Wasser weiterleitbar oder in den Klärbereich (26) rückführbar ist.

7. Kläranlage nach Anspruch 5 oder 6,
**dadurch gekennzeichnet,**
**dass** mehrere Kläreinheiten (20) vorgesehen sind, welche parallel und/oder seriell miteinander leitungsverbunden sind.

8. Verfahren zum Klären von Abwasser,
**dadurch gekennzeichnet,**
**dass** mindestens eine transportable Kläreinheit (20) nach einem der Ansprüche 1 bis 7 verwendet wird.

9. Verfahren nach Anspruch 8,
**dadurch gekennzeichnet,**
**dass** ein Teil des Feststoffs des Abwassers sich als Klärschlamm an der Oberfläche des Substrats (28) oder einem oberflächennahen Bereich absetzen und dort mineralisieren kann.

## Claims

1. Transportable waste water treatment unit for purifying waste water, comprising
- a box-shaped, watertight transport container (30) which is open at its upper side (36),
- a supply device (22) for supplying waste water into the transport container (30),
- a discharge device (40) for discharging treated waste water,
- a waste water treatment region (26) provided in the transport container (30), which is provided with a granular substrate (28), and
- reed plants (16) suitable for decomposing impurities in the waste water and planted on the substrate (28),
wherein the substrate (28) is built up in layers and at least one layer contains a porous, light-weight substrate (28),
**characterised in that**
the waste water treatment region (26) comprises at least two partially separated waste water treatment sections (27a, 27b),
**in that** the supply device (22) for the waste water comprises at least one inlet (23) which is arranged above the substrate (28),
**in that** the supply device (22) comprises a first inlet (23a) for the first waste water treatment section (27a) and a second inlet (23b) for the second waste water treatment section (27b),
**in that** the discharge device (40) comprises at least one outlet element (42) running horizontally in the substrate (28) and connected to a discharge line (44) which leads out of the transport container (30) in order to receive and discharge the purified waste water,
**in that** a truncated pyramid-shaped impact element (29) is arranged on the substrate (28) below the inlet (23), wherein the waste water passes through a region of ambient air before impacting on the truncated pyramid-shaped impact element (29),
**in that** the first inlet (23a) and the second inlet (23b) each open out above the truncated pyramid-shaped impact element (29), and
**in that** the outlet element (42) is arranged in the lower substrate layer.

2. Waste water treatment unit according to claim 1,
**characterised in that**
a conduit system (50) is provided in the waste water treatment region (26) for introducing air into the substrate.

3. Waste water treatment unit according to any one of claims 1 to 2,
**characterised in that**
on the transport container (30), at least one overflow opening (37) is arranged at an upper region and at least one drain valve (38) is arranged at a lower region.

4. Waste water treatment unit according to claim 3,
**characterised in that**
the discharge line (44) leads to a measuring and diverting device (60) by means of which a purity of the purified waste water can be measured, and
the purified waste water is passed on or recirculated depending on a measurement result.

5. Waste water treatment plant, comprising
- at least one waste water collection region (12), and
- at least one waste water treatment unit (20) according to any one of claims 1 to 5,
wherein waste water can be sucked in from the waste water collection region (12) by means of a pump (14) and can be fed to the at least one waste water treatment unit (20).

6. Waste water treatment plant according to claim 5,
**characterised in that**
a measuring and diverting device (60) is provided, by means of which a purity of the clarified waste water can be measured, wherein the clarified water can be passed on or recirculated to the waste water treatment region (26) depending on a measurement result.

7. Waste water treatment plant according to claim 5 or 6,
**characterised in that**
a plurality of waste water treatment units (20) are provided which are line-connected to one another in parallel and/or in series.

8. Method for clarifying waste water,
**characterised in that**
at least one transportable waste water treatment unit (20) according to any one of claims 1 to 7 is used.

9. Method according to claim 8,
**characterised in that**
a part of the solid matter of the waste water is deposited as sewage sludge on the surface of the substrate (28) or a region near the surface and can mineralise there.

## Revendications

1. Unité d'épuration transportable pour l'épuration des eaux usées avec
- un contenant de transport (30) étanche à l'eau en forme de caisse, lequel est ouvert sur son côté supérieur (36),
- un système d'amenée (22) pour amener des eaux usées dans le contenant de transport (30),
- un système d'évacuation (40) pour évacuer des eaux usées clarifiées,
- une zone d'épuration (26) prévue dans le contenant de transport (30), laquelle est pourvue d'un substrat (28) sous forme de granulés, et
- des roseaux (16), lesquels sont adaptés pour décomposer des impuretés dans les eaux usées et sont plantés sur le substrat (28),
dans lequel le substrat (28) est élaboré par couches et au moins une couche contient un substrat (28) poreux léger,
**caractérisé en ce**
**que** la zone d'épuration (26) présente au moins deux sections d'épuration (27a, 27b) séparées en partie,
**que** le système d'amenée (22) pour les eaux usées présente au moins une entrée (23), laquelle est disposée au-dessus du substrat (28),
**que** le système d'amenée (22) présente pour la première section d'épuration (27a) une première entrée (23a) et pour la deuxième section d'épuration (27b) une deuxième entrée (23b),
**que** le système d'évacuation (40) présente au moins un élément de sortie (42) s'étendant de manière horizontale dans le substrat (28), lequel est relié, pour recevoir et dévier les eaux usées nettoyées, à un conduit d'évacuation (44), lequel mène hors du contenant de transport (30),
**qu'**un élément d'impact (29) en forme de tronc de pyramide est disposé sur le substrat (28) sous l'entrée (23), dans lequel les eaux usées traversent une zone air ambiant avant de rencontrer l'élément d'impact (29) en forme de tronc de pyramide,
**que** la première entrée (23a) et la deuxième entrée (23b) débouchent respectivement au-dessus de l'élément d'impact (29) en forme de tronc de pyramide, et
**que** l'élément de sortie (42) est disposé dans la couche de substrat inférieure.

2. Unité d'épuration selon la revendication 1,
**caractérisée en ce**
**qu'**un système de conduit (50) destiné à introduire de l'air dans le substrat est prévu dans la zone d'épuration (26).

3. Unité d'épuration selon l'une quelconque des revendications 1 à 2,
**caractérisée en ce**
**qu'**au moins une ouverture de trop-plein (37) est disposée sur le contenant de transport (30) dans une zone supérieure et au moins une soupape de sortie (38) est disposée sur une zone inférieure.

4. Unité d'épuration selon la revendication 3,
**caractérisée en ce**
**que** le conduit d'évacuation (44) mène à un système de mesure et de dérivation (60), par lequel une pureté des eaux usées nettoyées peut être mesurée, et
**que** les eaux usées nettoyées sont transférées ou refoulées en fonction d'un résultat de mesure.

5. Installation d'épuration avec
- au moins une zone de collecte des eaux usées (12) et
- au moins une unité d'épuration (20) selon l'une quelconque des revendications 1 à 5,
dans laquelle des eaux usées peuvent être aspirées par la zone de collecte des eaux usées (12) et peuvent être acheminées à l'au moins une unité d'épuration (20) au moyen d'une pompe (14).

6. Installation d'épuration selon la revendication 5,
**caractérisée en ce**
**qu'**est prévu un système de mesure et de dérivation (60), par lequel une pureté des eaux usées épurées peut être mesurée, dans laquelle les eaux épurées peuvent être transférées ou refoulées dans la zone d'épuration (26) en fonction d'un résultat de mesure.

7. Installation d'épuration selon la revendication 5 ou 6,
**caractérisée en ce**
**que** sont prévues plusieurs unités d'épuration (20), lesquelles sont reliées par conduites les unes aux autres en parallèle et/ou en série.

8. Procédé pour l'épuration d'eaux usées,
**caractérisé en ce**
**qu'**au moins une unité d'épuration (20) transportable selon l'une quelconque des revendications 1 à 7 est utilisée.

9. Procédé selon la revendication 8,
**caractérisé en ce**
**qu'**une partie des matières solides des eaux usées peut se déposer en tant que boue d'épuration à la surface du substrat (28) ou sur une zone proche de la surface et peut s'y reminéraliser.
